# EUROPÄISCHE PATENTANMELDUNG

(11) **EP 1 466 771 A2**
(43) Veröffentlichungstag der Anmeldung: **13.10.2004**
(21) Anmeldenummer: 04006345.5
(22) Anmeldetag: 17.03.2004
(51) Int. Cl.: B60J 11/00

(54) **Ausfahrbare Schutzmarkise und Kraftfahrzeug mit Schutzmarkise**

(30) Priorität: 11.04.2003 DE 10316592
(71) Anmelder: DaimlerChrysler AG, 70567 Stuttgart (DE)
(72) Erfinder: Glaser, Joachim, 75391 Gechingen (DE); Müller, Carsten, 71711 Steinheim (DE); Wallenwein, Waldemar, 72414 Rangendingen (DE)

(57) **Zusammenfassung**

2.1. Die Erfindung betrifft eine ausfahrbare Schutzmarkise für Fahrzeuge mit einem am Fahrzeug befestigbaren Grundrahmen und einer mittels eines Gestänges zwischen wenigstens einer eingefahrenen Grundstellung und einer ausgefahrenen Endstellung bewegbaren Schutzfläche.
2.2. Erfindungsgemäß ist der Grundrahmen für eine Anordnung im Innenraum des Fahrzeugs im Bereich der oberen Begrenzung einer Tür-, Fenster- oder Klappenöffnung des Fahrzeugs ausgebildet, so dass die Schutzfläche ausgehend von ihrer Grundstellung durch die geöffnete Tür-, Fenster- oder Klappenöffnung hindurch in diese Stellung ausfahrbar ist.

## Beschreibung

Die Erfindung betrifft eine ausfahrbare Schutzmarkise für Fahrzeuge mit einem am Fahrzeug befestigbaren Grundrahmen und einer mittels eines Gestänges zwischen wenigstens einer eingefahrenen Grundstellung und einer ausgefahrenen Endstellung bewegbaren Schutzfläche. Die Erfindung betrifft auch ein Kraftfahrzeug mit einer erfindungsgemäßen Schutzmarkise.

Aus der deutschen Patentschrift DE 39 09 937 C2 ist eine elektrisch verfahrbare Markise für einen Omnibus bekannt, die einen am Fahrzeug befestigbaren Grundrahmen und eine mittels eines Gestänges zwischen einer eingefahrenen Grundstellung und einer ausgefahrenen Endstellung bewegbaren Schutzfläche versehen ist. Der Grundrahmen ist in ein Gehäuse integriert, das im Dachbereich des Omnibusses in die Kraftfahrzeugkarosserie integriert sein kann. In diesem Fall ist die Markise innerhalb eines Schutzkastens vorgesehen, der zur Umgebung des Fahrzeugs hin geöffnet ist. In der eingefahrenen Grundstellung ist die Schutzmarkise vollständig innerhalb des Schutzkastens angeordnet.

Mit der Erfindung soll eine in einfacher Weise nachrüstbare Schutzmarkise bereitgestellt werden.

Erfindungsgemäß ist hierzu eine ausfahrbare Schutzmarkise für Fahrzeuge mit einem am Fahrzeug befestigbaren Grundrahmen und einer mittels eines Gestänges zwischen wenigstens einer eingefahrenen Grundstellung und einer ausgefahrenen Endstellung bewegbaren Schutzfläche vorgesehen, bei der der Grundrahmen für eine Anordnung im Innenraum des Fahrzeugs im Bereich der oberen Begrenzung einer Tür-, Fenster- oder Klappenöffnung des Fahrzeugs ausgebildet ist, so dass die Schutzfläche ausgehend von ihrer Grundstellung durch die geöffnete Tür-, Fenster- oder Klappenöffnung hindurch in die Endstellung ausfahrbar ist.

Indem der Grundrahmen im Innenraum des Fahrzeugs angeordnet wird und die Markise durch eine im Serienzustand des Kraftfahrzeugs vorhandene Tür-, Fenster- oder Klappenöffnung, beispielsweise Heckklappenöffnung, hindurch ausgefahren wird, ist die Schutzmarkise ohne Beeinträchtigung oder Beschädigung der Karosserieaußenhaut anbringbar. Darüber hinaus entstehen gegenüber dem Serienzustand des Kraftfahrzeugs keinerlei Abdichtungsprobleme des Innenraums, da die serienmäßigen Tür-, Fenster- oder Klappendichtungen erhalten bleiben. Die äußeren Abmessungen des Fahrzeugs werden nicht verändert.

In Weiterbildung der Erfindung ist der Grundrahmen in ein Gehäuse integriert, wobei eine Außenfläche des Gehäuses passend zu einer Innenraumoberfläche im Bereich der oberen Begrenzung der Tür-, Fenster- oder Klappenöffnung ausgebildet ist.

Durch diese Maßnahmen kann sich die Außenfläche des Gehäuses an die Innenraumoberfläche anschmiegen, so dass eine platzsparende Unterbringung gewährleistet ist.

In Weiterbildung der Erfindung sind das Gestänge und die Schutzfläche in der eingefahrenen Grundstellung vollständig innerhalb des Gehäuses angeordnet.

Auf diese Weise wird eine optisch ansprechende Gestaltung erreicht und die Schutzmarkise ist gegen Verschmutzung oder Beschädigung geschützt.

In Weiterbildung der Erfindung ist das Gestänge in die ausgefahrene Endstellung vorgespannt.

Dadurch ist die Schutzmarkise beispielsweise durch Knopfdruck selbsttätig ausfahrbar und kann manuell oder elektromotorisch wieder eingeschoben werden. Bei manuellem Einschieben sind zur Nachrüstung der Schutzmarkise keine elektrischen Anschlüsse erforderlich.

In Weiterbildung der Erfindung ist das Gestänge in der eingefahrenen Grundstellung mittels eines Rasthebels gehalten, der vom Innenraum des Fahrzeugs aus betätigbar ist.

Auf diese Weise kann nach Öffnen der mit der Schutzmarkise versehenen Türöffnung noch vom Innenraum aus nach Öffnen der Türe die Schutzmarkise durch einfaches Betätigen des Rasthebels ausgefahren werden. Der Rasthebel ist zweckmäßigerweise in die Raststellung vorgespannt, so dass dieser beim Einschieben automatisch einrastet, wenn das Gestänge die eingefahrene Grundstellung erreicht hat.

In Weiterbildung der Erfindung weist das Gestänge wenigstens zwei gelenkig miteinander verbundene Hebel auf und nimmt in der ausgefahrenen Endstellung eine Totpunktraststellung ein.

Dadurch kann ohne zusätzliche Rastvorrichtungen eine sichere Arretierung der Schutzmarkise in der Endstellung erreicht werden.

In Weiterbildung der Erfindung ist die Schutzfläche als flexible Materialbahn ausgebildet, die innerhalb des Grundrahmens auf eine Rolle aufrollbar ist, wobei die Rolle für eine Einziehbewegung der Materialbahn in die eingefahrene Endstellung vorgespannt ist.

In Weiterbildung der Erfindung ist das Gestänge als Scherengestänge ausgebildet.

Mittels eines Scherengestänges lässt sich ein kompakter, stabiler Aufbau bei großer erzielbarer ausgefahrener Spannweite erreichen.

In Weiterbildung der Erfindung weist das Gehäuse eine Grundplatte und eine an der Fahrzeugstruktur befestigbare Haube auf, wobei die Grundplatte lösbar mit der Haube verbunden ist und die ausfahrbare Schutzfläche und das Gestänge an der Grundplatte befestigt sind.

Die Grundplatte kann mit der Haube beispielsweise über Schrauben, eine Rastverbindung, eine Knebelverbindung oder einen Bajonettverschluss verbunden sein. Alle mechanischen, beweglichen Komponenten sind vorteilhafterweise am Grundplattenmodul befestigt und die Haube ist als reines Befestigungsund Abdeckteil ausgebildet. Nach Befestigung der Haube an der Fahrzeugstruktur kann die Grundplatte mit allen mechanischen Komponenten dann beispielsweise an der Haube verrastet werden.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine perspektivische, abschnittsweise Ansicht eines Kraftfahrzeugs mit einer erfindungsgemäßen Schutzmarkise in der ausgefahrenen Endstellung,
- Fig. 2: die Schutzmarkise der Fig. 1 in der eingefahrenen Grundstellung,
- Fig. 3: eine Ansicht der Schutzmarkise der Fig. 1 bei abgenommener Haube und
- Fig. 4: eine Schnittansicht der Schutzmarkise der Fig. 1 in ausgefahrener Stellung.

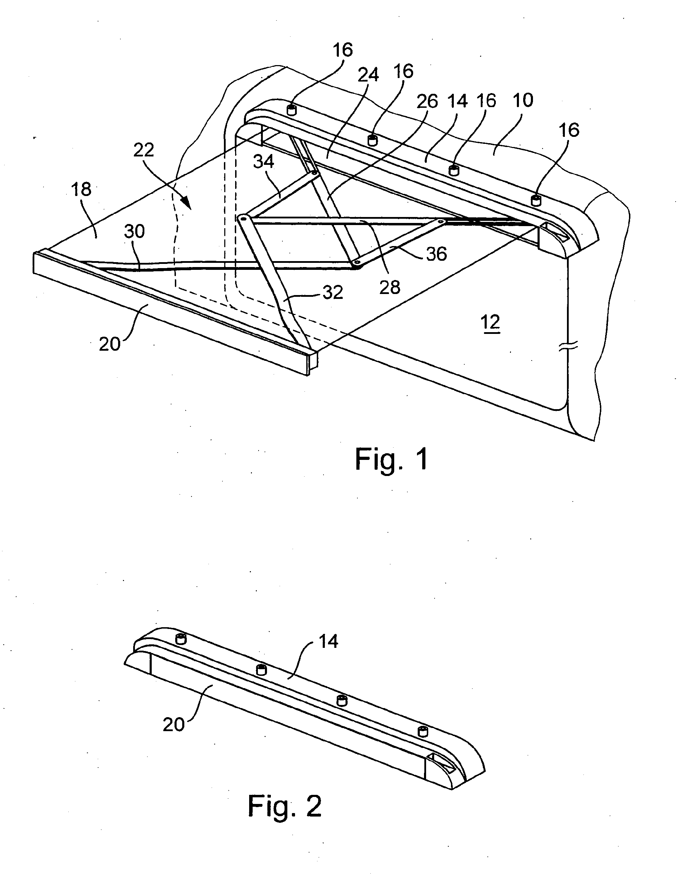

In der Darstellung der Fig. 1 ist abschnittsweise ein Kraftfahrzeug 10 mit einer Türöffnung 12 zu erkennen. Die Türöffnung 12 ist beispielsweise als Schiebetüröffnung ausgebildet und seitlich am Kraftfahrzeug angeordnet. Im Bereich der oberen Begrenzung der Türöffnung 12 ist ein Schutzmarkisengehäuse 14 angeordnet. Die Kraftfahrzeugkarosserie ist dabei transparent dargestellt, so dass auch Teile des Gehäuses 14, die an und für sich in der Darstellung der Fig. 1 von der Karosserie des Kraftfahrzeugs 10 verdeckt wären, zu erkennen sind. Das Gehäuse 14 ist mit der Karosserie des Kraftfahrzeugs 10 über Schrauben verbunden, die sich durch Durchgangsöffnungen 16 im Gehäuse 14 erstrecken. Wie in der Fig. 1 zu erkennen ist, ist das Gehäuse 14 innerhalb des Innenraums des Kraftfahrzeugs 10 angeordnet. Im eingefahrenen Zustand der Schutzmarkise, wie er in der Fig. 2 dargestellt ist, ragt keines ihrer Teile durch die Türöffnung 12 hindurch, so dass die zum Verschließen der Türöffnung 12 vorgesehene Schiebetüre in konventioneller Weise die Türöffnung 12 verschließen kann.

Die erfindungsgemäße Schutzmarkise ist somit in einfacher Weise nachrüstbar und bei ihrer Nachrüstung erfolgt keine Beeinträchtigung oder Beschädigung der Karosserieaußenhaut durch das nachträgliche Anbringen von Befestigungsteilen auf der Außenhaut. Die äußeren Abmessungen des Kraftfahrzeugs 10 verändern sich bei geschlossener Türe nicht. Ein wesentlicher Vorteil ist auch, dass keinerlei zusätzliche Abdichtungsmaßnahmen durch die Nachrüstung der Markise verursacht werden, da das serienmäßig vorhandene Abdichtsystem der Schiebetüre erhalten und funktionsfähig bleibt.

Aus dem Gehäuse 14 der Schutzmarkise ist eine textile, flexible Materialbahn 18 ausziehbar, die der besseren Übersichtlichkeit halber transparent dargestellt ist. Die flexible Materialbahn 18 erstreckt sich von dem Gehäuse 14 aus bis zu einer Querleiste 20. Die Querleiste 20 ist über ein Scherengestänge 22 an dem Gehäuse 14 geführt. Im eingefahrenen Zustand der Markise, wie er in der Fig. 2 dargestellt ist, verschließt die Querleiste 20 eine Öffnung 24 in dem Gehäuse 14, durch die das Scherengestänge 22 und die flexible Materialbahn 18 ausgefahren werden.

Das Scherengestänge 22 besteht aus insgesamt sechs Hebeln, die gelenkig miteinander verbunden sind. Zwei erste Hebel 26 und 28 sind schwenkbar an zwei gegenüberliegenden Enden des Gehäuses 14 gelagert und in einer Ebene verschwenkbar, die parallel zu der ausgezogenen flexiblen Materialbahn 18 liegt. In der Fig. 1 ist die ausgefahrene Endstellung der Schutzmarkise dargestellt, in der die ersten Hebel 26 und 28 sich in einem Winkel von etwa 40° von dem Gehäuse weg erstrecken und sich ausgehend von ihrem Anlenkpunkt am Gehäuse 14 nach etwa zwei Drittel ihrer Länge überkreuzen.

An der Querleiste 20 sind in zu den ersten Hebeln 26, 28 spiegelbildlicher Weise zwei zweite Hebel 30, 32 angelenkt, wobei die zweiten Hebel 30, 32 an gegenüberliegenden Enden der Querleiste 20 um eine Ebene schwenkbar angelenkt sind, die parallel zu der ausgezogenen flexiblen Materialbahn 18 liegt. Ausgehend von der Querleiste 20 überkreuzen sich die zweiten Hebel 30, 32 nach etwa zwei Dritteln ihrer Länge. An dem jeweiligen, dem an der Querleiste 20 gegenüberliegenden Ende der zweiten Hebel 30, 32 sind diese schwenkbar mit dem ersten Hebel 26 bzw. dem ersten Hebel 28 verbunden.

Wie in der Darstellung der Fig. 1 zu erkennen ist, bilden die ersten und zweiten Hebel 26, 28, 30 und 32 ein Scherengestänge, mittels dem die Querleiste 20 senkrecht von dem Gehäuse 14 wegbewegt werden kann, so dass die beiden Enden der Querleiste 20 stets den gleichen Abstand zum Gehäuse 14 haben. Eine ausgefahrene Endstellung der Querleiste 20 wird durch zwei dritte Hebel 34, 36 definiert, die jeweils mittels einer Kulisse an den ersten Hebeln 26 und 28, die an dem Gehäuse 14 schwenkbar angelenkt sind, geführt sind. Jeder der ersten Hebel 26, 28 weist eine Kulissenführung auf, die als Langloch ausgebildet ist und sich ausgehend von dem Anlenkpunkt des jeweiligen ersten Hebels 26, 28 etwa auf ein Drittel der Länge dieser Hebel von dem Anlenkpunkt weg erstreckt. Das dem in der Kulisse der ersten Hebel 26 bzw. 28 geführten Ende gegenüberliegende Ende der dritten Hebel 34 und 36 ist in einer Weise mit den ersten und zweiten Hebeln 26, 30 bzw. 28 und 32 verbunden, so dass dieses Ende um die gleiche Schwenkachse schwenkbar ist, an der die ersten und zweiten Hebel 26 und 30 bzw. 28 und 32 schwenkbar miteinander verbunden sind. Die kulissengeführten dritten Hebel 34 und 36 stabilisieren das Scherengestänge 22, so dass auch große Spannweiten in der ausgefahrenen Endstellung erreichbar sind und das Scherengestänge 22 dennoch kompakt und leicht ausgeführt werden kann. Das Scherengestänge 22 kann in der ausgefahrenen Endstellung, die in der Fig. 1 dargestellt ist, eine Totpunktraststellung einnehmen, so dass das Ausüben von Druck auf die Querleiste 20 in Richtung auf das Gehäuse 14 nicht ohne weiteres zum Einfahren der Markise führt. Beispielsweise nehmen die dritten Hebel 34 und 36 relativ zu den Kulissen in den ersten Hebeln 26 bzw. 28 in der ausgefahrenen Endstellung eine Totpunktraststellung ein, so dass vor dem Einschieben der Querleiste 20 die dritten Hebel 34 und 36 aus ihrer Totpunktstellung heraus bewegt werden müssen.

Die Darstellung der Fig. 2 zeigt die sehr kompakten Abmessungen der Markise im eingefahrenen Zustand. Die Querleiste 20 schließt in der eingefahrenen Grundstellung bündig mit den Außenflächen des Gehäuses 14 ab. Neben kompakten Außenmaßen wird dadurch ein sehr guter Schutz des innerhalb des Gehäuses 14 liegenden Scherengestänges 22 sowie der flexiblen Materialbahn 18 erreicht. Darüber hinaus ist die Schutzmarkise optisch ansprechend gestaltet und ihre glatten Außenflächen bieten lediglich ein geringes Verletzungspotential. Es ist dabei festzustellen, dass sich die in der Fig. 2 obere Außenfläche des Gehäuses 14 sich an die Kontur des Innenraums im Bereich der oberen Begrenzung der Türöffnung 12 anschmiegt.

Dadurch wird eine optimale Raumausnutzung erreicht und die lichte Höhe der Türöffnung 12 nicht übermäßig beschränkt.

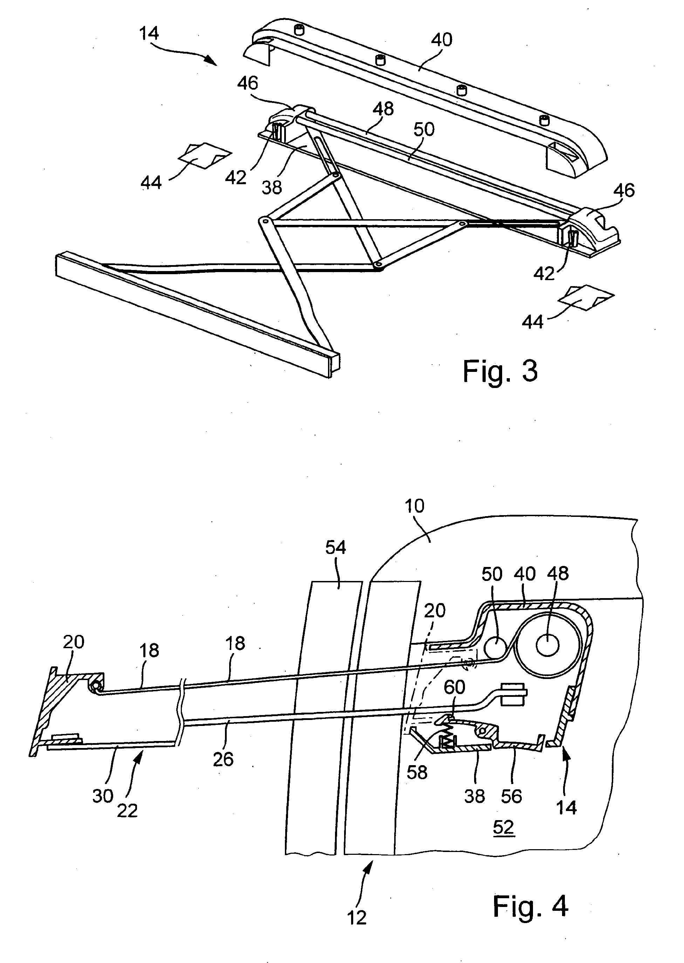

Die Darstellung der Fig. 3 verdeutlicht den Aufbau des Gehäuses 14. Das Gehäuse 14 weist eine Grundplatte 38 sowie eine Haube 40 auf, wobei die Haube 40 auf mehrere Rast-Klemm-Stifte 42 auf der Grundplatte 38 aufgerastet werden kann. In der Darstellung der Fig. 3 sind lediglich zwei der Rast-Klemm-Stifte zu erkennen. Anstelle der Rast-Klemm-Stifte 42 könnte die Grundplatte 38 auch mittels Schraubverbindungen mit der Haube 40 verbunden werden. Die Rast-Klemm-Stifte sind vom Fahrzeuginnenraum, d.h. von der in der Fig. 3 unteren Fläche der Grundplatte 38 her zugänglich und zum Abdecken der zugehörigen Zugangsöffnungen sind am rechten bzw. linken Ende der Grundplatte 38 Abdeckplatten 44 vorgesehen.

Die Grundplatte 38 weist an ihrem rechten und linken Ende jeweils einen Vorsprung 46 auf, der zum jeweiligen Ende der Grundplatte 38 hin abfallend gestaltet ist. Dadurch ist die Form der Vorsprünge 46 an die Form der Haube 40 und einen Eckbereich der Türöffnung 12 angepasst. Zwischen den beiden Vorsprüngen 46 ist eine Rolle 48 drehbar gelagert, die für die Aufnahme der flexiblen Materialbahn 18 vorgesehen ist. Die Rolle 48 kann beispielsweise durch Federantriebe in den Vorsprüngen 46 in einer Weise vorgespannt sein, dass im entspannten Zustand die flexible Materialbahn 18 vollständig auf die Rolle 48 aufgewickelt ist. Innerhalb der Vorsprünge 46 kann aber beispielsweise auch ein elektromotorischer Antrieb für die Rolle 48 vorgesehen sein.

In einer Richtung parallel zur Grundplatte 38 ist eine weitere Rolle 50 angeordnet, die ebenfalls zwischen den beiden Vorsprüngen 46 drehbar gelagert ist. Die Rolle 50 dient als Umlenkrolle für die flexible Materialbahn 18, wenn diese einoder ausgezogen wird.

In der Schnittansicht der Fig. 4 ist die Anordnung der Markise genauer zu erkennen. Das Gehäuse 14 mit der Grundplatte 38 und der Haube 40 ist innerhalb eines Innenraums 52 des Kraftfahrzeugs 10 angeordnet. In der vollständig eingefahrenen Grundstellung der Markise ist auch die Querleiste 20 innerhalb des Innenraums 52 angeordnet und liegt an der Haube 40 sowie der Grundplatte 38 an. Die Position der Querleiste 20 in der eingefahrenen Grundstellung ist in der Darstellung der Fig. 4 mit gestrichelten Linien angedeutet. Da sich die Markise in der eingefahrenen Grundstellung vollständig innerhalb des Fahrzeuginnenraums 52 befindet, kann die Türöffnung 12 mittels der Schiebetür 54 in konventioneller Weise verschlossen werden.

In der Darstellung der Fig. 4 ist weiter zu erkennen, dass die Haube 40 des Gehäuses 14 an die Kontur der Kraftfahrzeugkarosserie im Bereich der oberen Begrenzung der Türöffnung 12 bzw. an die Innenraumkontur angepasst ist, die sich an die obere Begrenzung der Türöffnung 12 anschließt.

Wie bereits ausgeführt wurde, wird die flexible Materialbahn 18 auf die Rolle 48 aufgewickelt bzw. von dieser abgezogen und dabei durch die Rolle 50 geführt. An der Querleiste 20 ist die flexible Materialbahn 18 eingeklemmt. Dies wird dadurch erreicht, dass am Ende der flexiblen Materialbahn 18 ein Auge ausgebildet ist, das in einer schlitzartigen Ausnehmung mit etwa kreisförmigem Querschnitt angeordnet wird. Nach Einschieben eines Querstabes in das Auge kann die flexible Materialbahn 18 dann nicht mehr aus der Ausnehmung herausgezogen werden und ist an der Querleiste 20 gesichert.

Wie ebenfalls bereits ausgeführt wurde, ist das Scherengestänge 22 in die ausgefahrene Endstellung vorgespannt. Dies kann beispielsweise durch Gummizüge zwischen den einzelnen Hebeln oder Spiralfedern an den Anlenkpunkten der ersten und zweiten Hebel 26, 28 und 30, 32 an dem Gehäuse 14 bzw. der Querleiste 20 bewirkt werden. In der eingefahrenen Grundstellung wird das Scherengestänge 22 mittels eines Rasthebels 56 gehalten, der an der Grundplatte 38 schwenkbar gelagert ist und mittels einer Feder 58 vorgespannt ist. Der Rasthebel 56 ist an seinem innerhalb des Gehäuses 14 liegenden Ende mit einer Rastnase versehen, die in der eingefahrenen Grundstellung, beispielsweise an dem zweiten Hebel 30 angreift und diesen daran hindert, sich aus dem Gehäuse 14 herauszubewegen. Dadurch ist das gesamte Scherengestänge 22 in der eingefahrenen Grundstellung fixieret. Durch eine Öffnung in der Grundplatte 38 ist ein der Rastnase gegenüberliegendes Ende des Rasthebels 56 vom Innenraum 52 aus zugänglich. Wird dieses Ende nach oben, d.h. in das Gehäuse 14 hineingedrückt, bewegt sich die Rastnase 60 gegen die Rastfeder 58 nach unten und gibt den zweiten Hebel 30 frei. Dadurch kann sich dieser aus dem Gehäuse 14 herausbewegen und das Scherengestänge 22 bewegt sich zusammen mit der Querleiste 20 in die ausgefahrene Endstellung und zieht dabei die flexible Materialbahn 18 von der Rolle 48 ab.

## Patentansprüche

1. Ausfahrbare Schutzmarkise für Fahrzeuge mit einem am Fahrzeug befestigbaren Grundrahmen(14) und einer mittels eines Gestänges (22) zwischen wenigstens einer eingefahrenen Grundstellung und einer ausgefahrenen Endstellung bewegbaren Schutzfläche (18),
**dadurch gekennzeichnet, dass**
der Grundrahmen (14) für eine Anordnung im Innenraum (52) des Fahrzeugs (10) im Bereich der oberen Begrenzung einer Tür-, Fenster- oder Klappenöffnung (12) des Fahrzeugs (10) ausgebildet ist, so dass die Schutzfläche (18) ausgehend von ihrer Grundstellung durch die geöffnete Tür-, Fenster- oder Klappenöffnung (12) hindurch in die Endstellung ausfahrbar ist.

2. Ausfahrbare Schutzmarkise nach Anspruch 1,
**dadurch gekennzeichnet, dass**
der Grundrahmen in ein Gehäuse (14) integriert ist, wobei eine Außenfläche des Gehäuses (14) passend zu einer Innenraumoberfläche im Bereich der oberen Begrenzung der Tür-, Fenster- oder Klappenöffnung (12) ausgebildet ist.

3. Ausfahrbare Schutzmarkise nach Anspruch 2,
**dadurch gekennzeichnet, dass**
das Gestänge (22) und die Schutzfläche (18) in der eingefahrenen Grundstellung vollständig innerhalb des Gehäuses (14) angeordnet sind.

4. Ausfahrbare Schutzmarkise nach einem der vorherigen Ansprüche,
**dadurch gekennzeichnet, dass**
das Gestänge (22) in die ausgefahrene Endstellung vorgespannt ist.

5. Ausfahrbare Schutzmarkise nach Anspruch 4,
**dadurch gekennzeichnet, dass**
das Gestänge (22) in der eingefahrenen Grundstellung mittels einer Rasthebels (56) gehalten ist, der vom Innenraum (52) des Fahrzeugs aus betätigbar ist.

6. Ausfahrbare Schutzmarkise nach einem der vorherigen Ansprüche,
**dadurch gekennzeichnet, dass**
das Gestänge (22) wenigstens zwei gelenkig miteinander verbundene Hebel (26, 28, 30, 32, 34, 36) aufweist und in der ausgefahrenen Endstellung eine Totpunktraststellung einnimmt.

7. Ausfahrbare Schutzmarkise nach einem der vorherigen Ansprüche,
**dadurch gekennzeichnet, dass**
die Schutzfläche als flexible Materialbahn (18) ausgebildet ist, die innerhalb des Grundrahmens (14) auf eine Rolle (50) aufwickelbar ist, wobei die Rolle (50) für eine Einziehbewegung der Materialbahn (18) in die eingefahrene Endstellung vorgespannt ist.

8. Ausfahrbare Schutzmarkise nach einem der vorherigen Ansprüche,
**dadurch gekennzeichnet, dass**
das Gestänge als Scherengestänge (22) ausgebildet ist.

9. Ausfahrbare Schutzmarkise nach einem der vorherigen Ansprüche,
**dadurch gekennzeichnet, dass**
das Gehäuse (14) eine Grundplatte (38) und eine an der Fahrzeugstruktur befestigbare Haube (40) aufweist, wobei die Grundplatte (38) lösbar mit der Haube verbunden ist und die ausfahrbare Schutzfläche (18) und das Gestänge (22) an der Grundplatte (38) befestigt sind.

10. Kraftfahrzeug mit Schutzmarkise, insbesondere nach einem der vorstehenden Ansprüche, wobei ein Grundrahmen (14) der Schutzmarkise am Fahrzeug (10) befestigt und eine Schutzfläche (18) der Schutzmarkise mittels eines Gestänges (22) zwischen wenigstens einer eingefahrenen Grundstellung und einer ausgefahrenen Endstellung verfahrbar ist,
**dadurch gekennzeichnet, dass**
der Grundrahmen (14) im Bereich einer oberen Begrenzung einer Tür-, Fenster- oder Klappenöffnung (12) im Innenraum (52) des Fahrzeugs (10) angeordnet ist und ausgehend von ihrer Grundstellung durch die geöffnete Tür-, Fenster- oder Klappenöffnung (12) in die Endstellung ausfahrbar ist.
